# EUROPÄISCHE PATENTSCHRIFT

(11) **EP 0 582 024 B1**
(45) Veröffentlichungstag und Bekanntmachung des Hinweises auf die Patenterteilung: **10.01.1996**
(21) Anmeldenummer: 92810602.0
(22) Anmeldetag: 06.08.1992
(51) Int. Cl.: B01D 29/03

(54) **Verwendung einer Vorrichtung zum Zurückhalten von festen Teilchen in einem Fluidstrom**
Use of a device for the separation of solid particles from a fluid
Utilisation d'un dispositif pour la séparation des particules solides d'un fluide

(43) Veröffentlichungstag der Anmeldung: 09.02.1994
(73) Patentinhaber: NEW SULZER DIESEL AG, CH-8401 Winterthur (CH)
(72) Erfinder: Hofer, Robert, CH-8353 Elgg (CH)
(74) Vertreter: Hammer, Bruno, Dr.

(56) Entgegenhaltungen:
- EP-A- 0 336 352
- DE-A- 2 835 900

## Beschreibung

Die Erfindung betrifft die Verwendung einer Vorrichtung zum Zurückhalten von festen Teilchen in einem Fluidstrom, der stossweise einen Kanal durchströmt.

Ueblicherweise werden feste Teilchen, die in einem kontinuierlich strömenden Fluid enthalten sind, durch Siebe aus Draht und dergleichen zurückgehalten. Fliesst ein solches Fluid jedoch stossweise durch einen Kanal, so sind die üblichen Drahtsiebe nicht in der Lage, die mit der stossweisen Belastung auftretenden Beanspruchungen zu ertragen. Auch ein Abstützen der Drahtsiebe auf deren Abströmseite durch metallische Stege oder Gitter bringt keine zufriedenstellende Abhilfe, zumal oft auch kein Platz vorhanden ist, um solche zusätzlichen Abstützungen unterzubringen.

In DE 28 35 900 sind ein Verfahren zum Herstellen von siebartig gelochte Platten mit sehr feinen Löchern sowie eine Vorrichtung zum Ausüben des Verfahrens solcher Platten beschreiben. Von zwei gegenüberliegenden Seiten her werden Rillen so tief eingearbeitet, dass an den Kreuzungstellen Löcher entstehen. Die Siebe sind zum Sortieren feinster kornartiger Substanzen in der Chemie, zum Benetzen, Filtern, aber auch als Bedampfungsdüsen in der Kunststoffverarbeitung geeignet.

Auch EP 0 336 352 beschreibt Mikrobauelmente, wie Siebe und Gitterstrukturen, mit parallelen Nuten oder Kanälen auf Ober- und Unterseite die zueinander winklig verlaufen, und die sich in der Tiefe überschneiden.

Der Erfindung liegt die Aufgabe zugrunde, feste Teilchen in einem Fluidstrom, der stossweise einen Kanal durchströmt, mit einer Vorrichtung zurückzuhalten, die einer Drosseleinrichtung vorgeschaltet ist, die dem Druckaufbau eines Druckfluids zum Steuern eines Ventils einer Dieselbrennkraftmaschine dient.

Diese Aufgabe wird erfindungsgemäß mit einer an sich bekannten Vorrichtung nach Anspruch 1 gelöst.

Durch diese Formgebung erhält die Vorrichtung eine ausreichende Eigensteifigkeit, die den durch die stossweise Zufuhr hervorgerufenen Wechselbelastungen gut standhält. Gleichzeitig ist der Platzbedarf für den plattenförmigen Bauteil relativ klein, so dass er auch nachträglich in bestehende Anlagen eingebaut werden kann. Das Herstellen des Bauteils ist sehr einfach, indem die Einschnitte auf jeweils einer Plattenseite durch einen Satz Scheibenfräser in einem Arbeitsgang hergestellt werden.

Ein Ausführungsbeispiel der Erfindung sind in der folgenden Beschreibung anhand der Figuren näher erläutert. Es zeigen:
- Fig.1: eine perspektivische Ansicht eines plattenförmigen Bauteils einer Vorrichtung gemäss der Erfindung,
- Fig.2: einen Axialschnitt durch eine Drosseleinrichtung mit vorgeschalteter erfindungsgemässer Vorrichtung und
- Fig.3: einen Längsschnitt durch eine Leitung mit eingebauter erfindungsgemässer Vorrichtung.

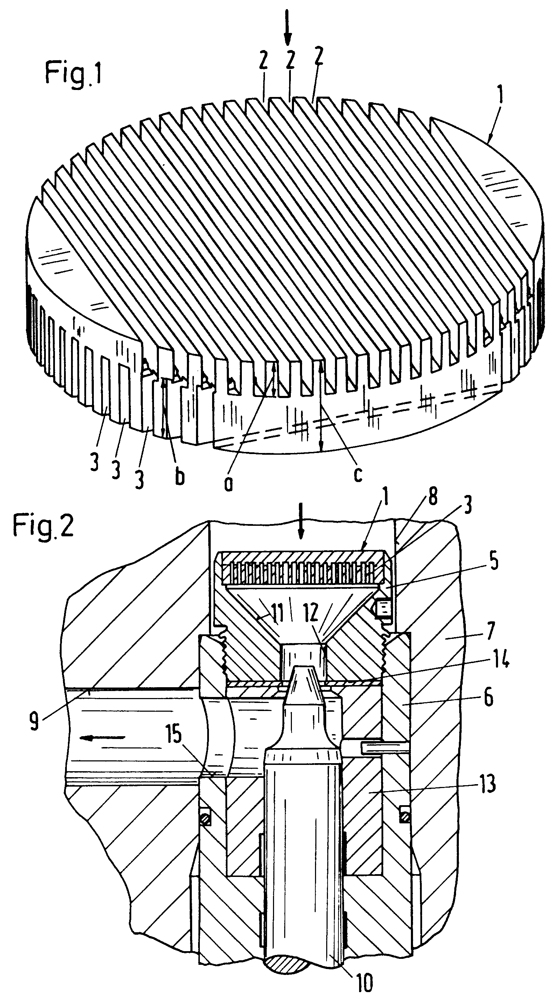

Gemäss Fig.1 weist eine Vorrichtung zum Zurückhalten von festen Teilchen einen plattenförmigen Bauteil 1 auf, der hier die Form einer kreisrunden Scheibe hat. Die planparallele Scheibe, z.B. aus Baustahl St 45, hat auf ihrer Oberseite viele Einschnitte 2, die unter sich parallel verlaufen und unter sich gleiche Tiefe a aufweisen. Der Querschnitt jedes Einschnitts ist rechteckig. Auch auf der Unterseite der Scheibe sind unter sich parallele Einschnitte 3 vorgesehen, die quer zu den Einschnitten 2 verlaufen, und zwar kreuzen sich die Einschnitte 2 und 3 rechtwinklig. Auch die Einschnitte 3 haben unter sich gleiche Tiefe b und haben rechteckigen Querschnitt. Die Summe der Tiefe a und der Tiefe b ist grösser als die Scheibendicke c. Dadurch entstehen in der Scheibe Durchbrüche nach Art eines Siebes. Die Durchbrüche haben quadratische Form, da die Breite der Einschnitte 2 und 3 unter sich gleich gross ist. Der Bereich, in dem sich die Einschnitte 2 und die Einschnitte 3 schneiden, liegt nicht auf halber Höhe der Scheibe, sondern ist in Fig.1 nach oben verschoben, da die Tiefe a kleiner ist als die Tiefe b. Dies ist dadurch begründet, dass der nicht dargestellte Fluidstrom in Fig.1 von oben her die Scheibe durchströmt und dabei ein Druckabfall von ungefähr 5 bar auftritt. Dadurch wird die Scheibe als Ganzes von oben her druckbelastet. Während das stegförmige Material zwischen den Einschnitten 2 dabei Druckspannungen unterworfen ist, wird das stegförmige Material zwischen den Einschnitten 3 auf Zug beansprucht, welche Beanspruchung günstiger ist als die Druckbeanspruchung.

Eine bereits hergestellte Scheibe hat folgende Abmessungen:

| | |
|---|---|
| Durchmesser der Scheibe | 42 mm |
| Breite der Einschnitte | 1 mm |
| Breite der Stege | 1 mm |
| Tiefe a | 3,5 mm |
| Tiefe b | 6 mm |
| Dicke c | 9 mm |

Nach dem Fräsen der Einschnitte wurde die Scheibe sandgestrahlt, um die Kanten zu brechen.

Gemäss Fig.2 ist diese Scheibe 1 in einem ringartigen Werkstück 5 befestigt, und zwar durch Hartlöten. Das ringförmige Werkstück 5 ist an seinem in Fig.2 unteren Ende mit Gewinde versehen und in das obere Ende eines Rohres 6 eingeschraubt. Das Rohr 6 ist in einem Gehäuse 7 angeordnet, das mit zwei zueinander rechtwinklig stehenden Bohrungen 8 und 9 versehen ist. Die Bohrung 8, zu der das Rohr 6 fluchtet und die den oberen Teil des ringförmigen Werkstücks 5 umgibt, dient als Zuführkanal für einen Fluidstrom, der feste Teilchen enthalten kann. Der Fluidstrom stammt aus einem Zylinderraum, in dem sich ein Steuerkolben hin- und herbewegt und aus dem der Steuerkolben taktweise flüssiges Druckmittel ablässt. Der Steuerkolben wird von einem Hubgeber bewegt und schiebt eine Druckmittelsäule zu einem Servokolben eines Auslassventils einer Zweitakt-Dieselbrennkraftmaschine. Diese Art Ventilsteuerung ist in der europäischen Patentanmeldung EP-A-0515307 näher erläutert.

Der vom Steuerkolben abgelassene Fluidstrom gelangt also stossweise mit einem Druck von beispielsweise 80 bar in die Bohrung 8 und wird beim Durchströmen des Gehäuses 7 gedrosselt. Zu diesem Zweck ist ein Drosselstift 10 vorgesehen, der im Rohr 6 auf- und abbeweglich geführt ist und koaxial zur Bohrung 8 angeordnet ist. Das ringförmige Werkstück 5 weist unterhalb der Scheibe 1 eine kegelige Bohrung 11 auf, die sich gegen den Drosselstift 10 hin verjüngt. Die kegelige Bohrung 11 geht in eine zylindrische Bohrung 12 über, in die der Drosselstift mit seinem oberen, sich nach oben kegelig verjüngenden Ende ragt. Auf der Höhe der Bohrung 9 ist der Drosselstift 10 von einem hülsenartigen Bauteil 13 umgeben, der seinerseits im Rohr 6 untergebracht ist und zwischen seiner oberen Stirnfläche und der unteren Stirnfläche des ringförmigen Werkstücks 5 eine Drosselscheibe 14 festhält. Im übrigen stellt der Bauteil 13 die Verbindung zwischen den Bohrungen 12 und 9 her, wozu im Rohr 6 eine mit der Bohrung 9 fluchtende Bohrung 15 vorgesehen ist. Die Drosselscheibe 14 weist ein Loch auf, dessen Durchmesser etwas kleiner ist als der der Bohrung 12 und als der Durchmesser der an das Loch anschliessenden Bohrung im Bauteil 13.

Der über die Bohrung 8 stossweise und in einer Menge von ca 12 l/s zuströmende Fluidstrom durchströmt zunächst die Scheibe 1, in der etwaige feste Teilchen zurückgehalten werden, die z.B. Bruchteile von Kolbenringen des Steuerkolbens sein können. Nach dem Durchströmen der Scheibe 1, wobei ein Druckabbau von ungefähr 6 bar stattfindet, gelangt der Fluidstrom über die Bohrung 12 in den Drosselspalt zwischen dem Drosselstift 10 und dem Loch der Drosselscheibe 14. In diesem Drosselspalt wird der Fluidstrom um etwa 70 bar in seinem Druck verringert, woraufhin das Fluid über die Bohrung 9 und eine nicht dargestellte Leitung in einen Tank gelangt.

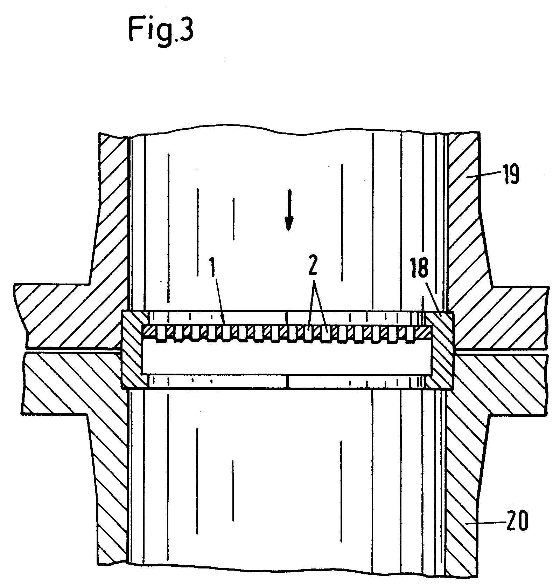

Gemäss Fig.3 ist die Scheibe 1 in einem zweiteiligen Ring 18 gefasst, der seinerseits zwischen zwei Abschnitten 19 und 20 einer Leitung eingespannt ist. Auch hier strömt das mit festen Teilchen beladene Fluid stossweise über den Abschnitt 19 zur Scheibe 1, in der die festen Teilchen zurückgehalten werden. Das gereinigte Fluid strömt dann über den Abschnitt 20 zur erneuten Verwendung in die Anlage zurück, aus der es verunreinigt gekommen ist.

Abweichend von der beschriebenen Ausführungsform in Fig.1 können die beiden jeweils einen Einschnitt 2 oder 3 seitlich begrenzenden Flächen Keilflächen bilden, die sich nach oben bzw. unten erweitern.

Die Verbindung zwischen der Scheibe 1 und den sie umgebenden Ring kann auch durch Kupferlöten oder durch Bördeln erfolgen.

Bei Scheiben mit relativ kleinen Abmessungen ist es auch möglich, sie durch ein Erodierverfahren herzustellen.

## Patentansprüche

1. Verwendung einer Vorrichtung (1, 5), die einen plattenförmigen Bauteil (1) aufweist, der auf beiden Seiten mit Einschnitten (2, 3) versehen ist, von denen die unter sich parallelen und gleich tiefen Einschnitte (2) der einen Plattenseite quer zu den unter sich parallelen und gleich tiefen Einschnitten (3) auf der anderen Plattenseite verlaufen, wobei die Tiefe (a) eines Einschnitts der einen Plattenseite und die Tiefe (b) eines Einschnitts der anderen Plattenseite zusammen grösser sind als die Dicke (c) des plattenförmigen Bauteils (1), zum Zurückhalten von festen Teilchen in einem Fluidstrom, der stossweise einen Kanal (8) durchströmt, wobei die Vorrichtung einer Drosseleinrichtung (7, 10, 11, 12) vorgeschaltet ist, die dem Druckabbau eines Druckfluids zum Steuern eines Ventils einer Dieselbrennkraftmaschine dient.

2. Verwendung einer Vorrichtung (1, 5) nach Anspruch 1, bei welcher die Tiefe (a) eines Einschnitts auf der Plattenseite, auf die der Fluidstrom zuströmt, kleiner ist, als die Tiefe (b) eines Einschnitts auf der anderen Plattenseite.

## Claims

1. Use of a device (1, 5) for holding back solid particles in a flow of fluid which flows through a channel (8) in jerks, the device being connected before a throttling device (7, 10, 11, 12), which serves to reduce the pressure of a pressure medium for controlling a valve of a diesel combustion engine, the device (1) comprising a component (1) having the form of a plate, which is provided on both sides with incisions (2) which are parallel with one another and of equal depth (a) on one side of the plate run across the incisions (3) which are parallel with one another and of equal depth (b) on the other side of the plate, the depth (a) of an incision (2) on the one side of the plate and the depth (b) of an incision (3) of the other side of the plate being together greater than the thickness (c) of the component (1) in the form of a plate.

2. Use of a device (1, 5) as claimed in claim 1, the depth (a) of an incision on the side of the plate, against which the fluid is flowing, being less than the depth (b) of the incision on the other side of the plate.

## Revendications

1. Utilisation d'un dispositif (1, 5) qui comporte un composant (1) en forme de plaque, qui est pourvu, des deux côtés, d'entailles (2, 3) parmi lesquelles, les entailles (2) parallèles entre elles et de même profondeur d'un côté de la plaque s'étendent transversalement aux entailles (3) parallèles entre elles et de même profondeur sur l'autre côté de la plaque, la profondeur (a) d'une entaille d'un côté de plaque et la profondeur (b) d'une entaille de l'autre côté de la plaque étant ensemble plus grandes que l'épaisseur (c) du composant (1) en forme de plaque, pour retenir des particules solides dans un courant de fluide, qui traverse par à-coups un canal (8), dans lequel est monté en amont du dispositif un dispositif d'étranglement (7, 10, 11, 12), qui sert à réduire la pression d'un fluide sous pression afin de commander une soupape d'un moteur diesel.

2. Utilisation d'un dispositif (1, 5) selon la revendication 1, dans lequel la profondeur (a) d'une entaille sur le côté de la plaque, où arrive le courant de fluide, est inférieure à la profondeur (b) d'une entaille sur l'autre côté de la plaque.
